# EUROPEAN PATENT APPLICATION

(11) **EP 4 686 612 A1**
(43) Date of publication of application: **04.02.2026**
(21) Application number: 25192733.1
(22) Date of filing: 30.07.2025
(51) Int. Cl.: B60R 5/00, B60N 2/30, B60N 3/06, B60N 3/10, B60R 7/02, B60R 7/04

(54) **ROAD CAR WITH LUGGAGE PLACEMENT ON A SEAT BACKREST**

(30) Priority: 31.07.2024 IT 202400017881
(71) Applicant: FERRARI S.p.A., 41100 Modena (IT)
(72) Inventor: CONIGLIARO, Vito, 41100 MODENA (IT); GRANJARD, Thomas, 41100 MODENA (IT)
(74) Representative: Studio Torta S.p.A.

(57) **Abstract**

A road car has a support frame (2); a passenger compartment (4) configured to accommodate, on the inside, at least a pair of seats (11) and a luggage compartment (12) obtained behind the seats (11); at least two access doors (10) to access the passenger compartment (4); at least one luggage item (16) configured to be stored in the luggage compartment (12); and a coupling unit (17) to connect the luggage item (16) and a backrest (14) of a relative seat (11) to one another in a releasable manner.

## Description

### CROSS-REFERENCE TO RELATED APPLICATIONS

This patent application claims priority from Italian patent application no. 102024000017881 filed on July 31, 2024, the entire disclosure of which is incorporated herein by reference.

### TECHNICAL FIELD

The invention relates to a road car.

### BACKGROUND

In particular, the invention relates to a road car of the kind comprising a support frame defining at least part of a lower floor of the road car; a passenger compartment projecting upwards from the lower floor; and at least two access doors allowing access to the passenger compartment.

The road car further comprises at least a pair of seats mounted inside the passenger compartment; and a luggage compartment located behind the seats.

Access to the luggage compartment is allowed from outside the passenger compartment by means of a hatch movable between an open position and a closed position of the luggage compartment, or from inside the passenger compartment by means of a dividing wall mounted between the seats and the luggage compartment and attached to the support frame in a releasable manner.

Known road cars of the type described above suffer from some drawbacks, which are mainly due to the fact that the insertion of the luggage in the luggage compartment through the hatch or through the dividing wall is relatively uncomfortable and tiring due to the relatively large size and weight of the luggage and the relatively small size of the passenger compartment, in particular in sports cars.

### SUMMARY

The object of the invention is to provide a road car that does not suffer from the drawbacks discussed above and can be manufactured in simple and economic fashion.

According to the invention, there is provided a road car as claimed in the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the road car according to the invention;
figures 2-5 are four schematic perspective views, with parts removed for greater clarity, of a detail of the road car of figure 1 shown in four different operating positions.

### DESCRIPTION OF EMBODIMENTS

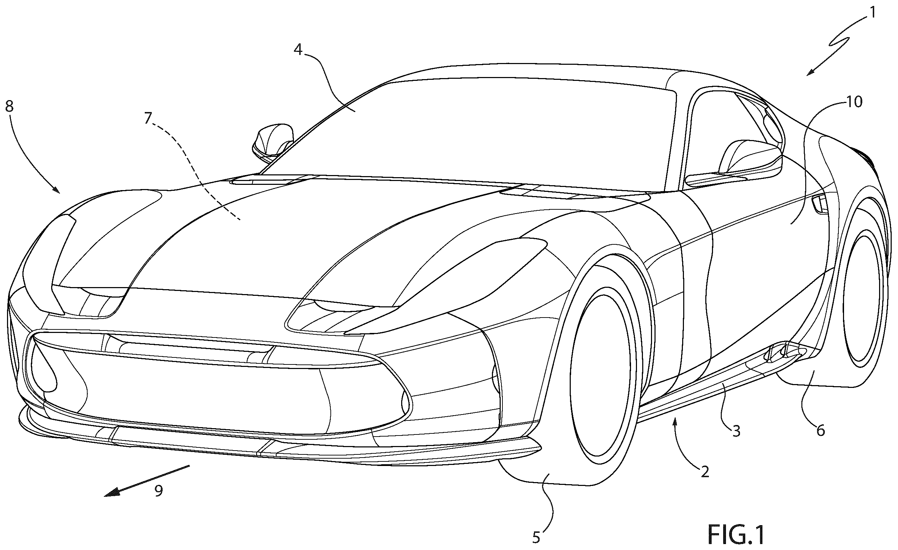

With reference to figure 1, number 1 indicates, as a whole, a road car comprising a support frame 2 defining at least part of a lower floor 3 of the car 1; a passenger compartment 4, which is mounted on the frame 2 and projects upwards from the floor 3; a front axle provided with two front wheels 5; and a rear axle provided with two rear wheels 6.

The car 1 further comprises a known drive unit 7, in this case an internal combustion engine, which is mounted, in this case, in a front area 8 of the frame 2 and is connected to the front wheels 5 to move the car 1 in a moving direction 9.

Obviously, according to some variants which are not shown herein:
the drive unit 7 is mounted in a rear area of the frame 2; and
the drive unit 7 is an electric motor or a hybrid motor.

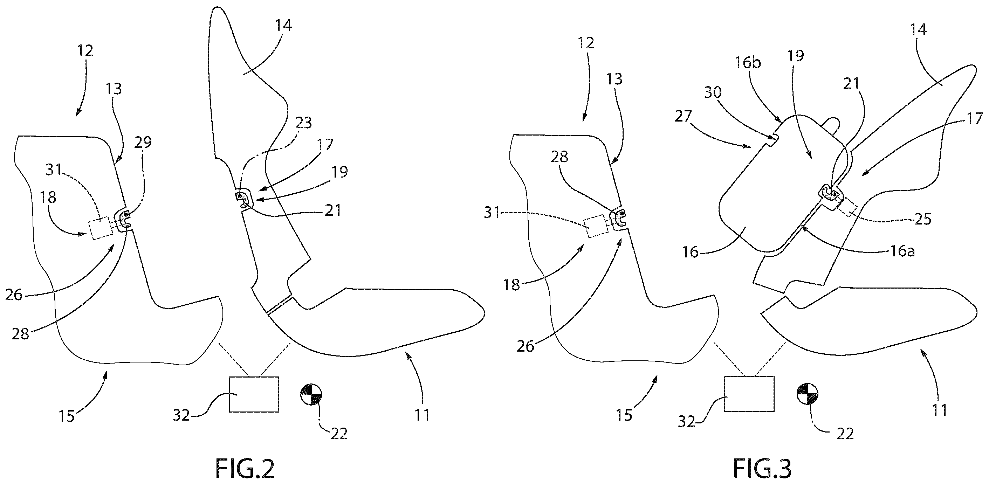

According to figures 2 to 5, the passenger compartment 4 is provided with two access doors 10 and is configured to house, on the inside, at least two seats 11 and a luggage compartment 12, obtained behind the seats 11 and delimited by a front wall 13 facing the seats 11.

Each seat 11 is coupled to the frame 2 in a sliding manner so as to move, relative to the frame 2, in the direction 9 and has a reclining backrest 14, which is movable between an upright position (figure 2) and a reclined position (figure 3).

The passenger compartment 4 is further provided with a storage system 15 to store at least one item of luggage 16 in the luggage compartment 12.

The system 15 comprises, in this case, a first coupling unit 17 to connect the luggage item 16 and the backrest 14 of a relative seat 11 to one another in a releasable manner and a second coupling unit 18 to connect the luggage item 16 and the luggage compartment 12 to one another in a releasable manner.

The first coupling unit 17 comprises a first coupling member 19 obtained on the backrest 14 and a second coupling member 20 obtained on the luggage item 16.

The member 19 comprises a hooking bar 21, which extends along the backrest 14 in a direction 22 that is substantially horizontal and transverse to the direction 9 (and perpendicular to the plane of the sheet of figures 2-5), has a hook-shaped cross-section and is coupled to the backrest 14 so as to rotate, relative to the backrest 14 itself, around a fulcrum axis 23, which is parallel to the direction 22.

The member 20 comprises a guide 24 obtained on a side face 16a of the luggage item 16 parallel to the direction 22.

The bar 21 is movable around the axis 23 between a coupling position, in which the bar 21 protrudes from the backrest 14 to be coupled to the guide 24, and a release position, in which the bar 21 disengages the guide 24 to be substantially arranged inside the backrest 14.

In this case, the bar 21 is moved between the aforementioned coupling and release positions manually or by an electric motor 25 housed inside the backrest 14 and having an output rod (not shown) connected to the bar 21.

The second coupling unit 18 comprises a first coupling member 26 obtained on the wall 13 of the luggage compartment 12 and a second coupling member 27 obtained on the luggage item 16.

The member 26 comprises a hooking bar 28, which extends along the wall 13 in the direction 22, has a hook-shaped cross-section and is coupled to the luggage compartment 12 so as to rotate, relative to the luggage compartment 12 itself, around a fulcrum axis 29, which is parallel to the direction 22.

The member 27 comprises a guide 30 obtained on a side face 16b of the luggage item 16 opposite the side face 16a parallel to the direction 22.

The bar 28 is movable around the axis 29 between a coupling position, in which the bar 28 protrudes from the wall 13 to be coupled to the guide 30, and a release position, in which the bar 28 disengages the guide 30 to be substantially arranged inside the wall 13.

In this case, the bar 28 is moved between the aforementioned coupling and release positions manually or by an electric motor 31 housed inside the luggage compartment 12 and having an output rod (not shown) connected to the bar 28.

The motors 25, 31 are connected to a detection device 32, for example a presence sensor, configured to detect the presence of the luggage item 16 on a backrest 14 or a given position of the seat 11 in the direction 9.

The operation of the storage system 15 will now be described with reference to one single seat 11 and starting from an instant in which the seat 11 taken into account is arranged in a rearward position.

The seat 11 is moved, following the activation of a control button (not shown) by the user, to a forward loading/unloading position; the backrest 14 of the seat 11 is moved (manually or by means of a relative operating device, which is known and not shown herein) to its reclined position; the bar 21 is moved by the motor 25 to its coupling position; and the luggage item 16 is connected to the backrest 14 by the user by means of the sliding coupling of the guide 24 along the bar 21 (figures 2 and 3).

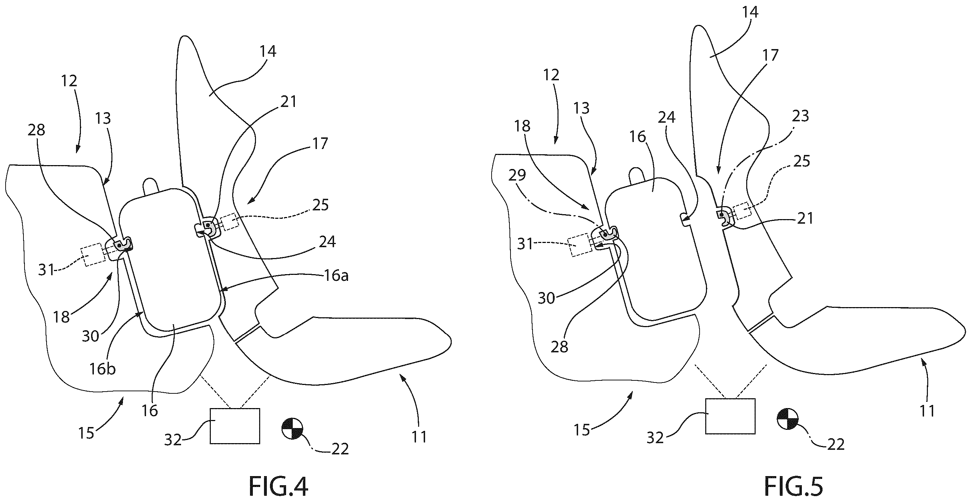

Subsequently, the backrest 14 is moved (manually or by means of the relative operating device) to its upright position so as to place the side face 16b of the luggage item 16 in a position facing the wall 13 of the luggage compartment 12; and the seat 11 is moved to a rearward transfer position so as to activate the detection device 32 and cause, in succession and in the following order, the motor 31 to move the bar 28 to its coupling position, in which it is coupled to the guide 30, and the motor 25 to move the bar 21 to its release position, in which it is released from the guide 24 (figure 4).

Once the luggage item 16 is stored in the luggage compartment 12, the seat 11 is moved back to a driving position (figure 5).

Obviously, the luggage item 16 is retrieved from the luggage compartment 12 with an operating sequence that is completely similar to the one described above, is activated by the user by means of the aforementioned control button (not shown) and comprises the steps of moving the seat 11 to its rearward transfer position, hooking the luggage item 16 to the bar 21, unhooking the luggage item 16 from the bar 28, moving the seat 11 to its forward loading/unloading position, moving the backrest 14 to its reclined position, disengaging the luggage from the bar 21 and returning the seat 11 to its driving position.

According to a variant that is not shown herein, the coupling unit 18 coupling the luggage compartment 12 and the luggage item 16 is eliminated and the luggage item 16 is only coupled to the backrest 14 of the relative seat 11.

The storage system 15 has some advantages that are mainly due to the fact that the storage of the luggage items 16 in the luggage compartment 12 is relatively simple and fast and guarantees a correct positioning of the luggage items 16 while the car 1 is running.

## Claims

1. A road car comprising a support frame (2); a passenger compartment (4) configured to house, on the inside, at least a pair of seats (11) and a luggage compartment (12) obtained behind the seats (11); at least two access doors (10) to access the passenger compartment (4); and at least one luggage item (16) configured to be stored in the luggage compartment (12); and **characterized in that** it further comprises a first coupling unit (17) to connect the luggage item (16) and a backrest (14) of a relative seat (11) to one another in a releasable manner.

2. The road car according to claim 1, wherein the first coupling unit (17) comprises a first coupling member (19) obtained on the backrest (14) and a second coupling member (20) obtained on the luggage item (16).

3. The road car according to claim 2, wherein the first coupling member (19) is movable between a coupling position, in which it is coupled to the second coupling member (20), and a release position, in which it is released from the second coupling member (20).

4. The road car according to claim 3, wherein the first coupling unit (17) further comprises a first operating device (25) to move the first coupling member (19) between said coupling and release positions.

5. The road car according to any one of the claims from 2 to 4, wherein the second coupling member (20) is coupled to the first coupling member (19) in a sliding manner.

6. The road car according to any one of the preceding claims and further comprising a second coupling unit (18) to connect the luggage item (16) and the luggage compartment (12) to one another in a releasable manner.

7. The road car according to claim 6, wherein the second coupling unit (18) comprises a third coupling member (26) obtained on the luggage compartment (12) and a fourth coupling member (27) obtained on the luggage item (16).

8. The road car according to claim 7, wherein the luggage compartment (12) is delimited by a front wall (13) facing the backrest (14); the third coupling member (26) being obtained on the front wall (13) of the luggage compartment (12).

9. The road car according to claim 7 or 8, wherein the third coupling member (26) is movable between a coupling position, in which it is coupled to the fourth coupling member (27), and a release position, in which it is released from the fourth coupling member (27).

10. The road car according to claim 9, wherein the second coupling unit (18) further comprises a second operating device (31) to move the third coupling member (26) between said coupling and release positions.

11. The road car according to claim 10, when it depends on any one of the claims from 2 to 5, and further comprising a detection device (32) to detect the presence of the luggage item (16) on the backrest (14); said first and/or second operating device (25, 31) being configured to move said first and/or third coupling member (19, 26) between the relative coupling and release positions in response to a signal of the detection device (32).

12. The road car according to claim 10, when it depends on any one of the claims from 2 to 5, wherein the seat (11) is coupled to the support frame (2) in a sliding manner; a detection device (32) being provided to detect a given position of the seat (11) along the support frame (2); and said first and/or second operating device (25, 31) being configured to move the said first and/or third coupling member (19, 26) between the relative coupling and release positions in response to a signal of the detection device (32).

13. The road car according to claim 12, wherein the seat (11) is movable along the support frame (2) between a loading and/or unloading position, a luggage transfer position for transferring the luggage item (16) between the backrest (14) and the luggage compartment (12), and a driving position.

14. The road car according to claim 12 or 13 and further comprising a control button to control the movement of the seat (11) along the support frame (2) and the operation of said first and second coupling unit (17, 18).
